(19) Europäisches Patentamt / European Patent Office / Office européen des brevets

(11) **EP 1 868 316 B1**

(12) **FASCICULE DE BREVET EUROPEEN**

(45) Date de publication et mention
de la délivrance du brevet:
**01.04.2020 Bulletin 2020/14**

(51) Int Cl.:
***H04L 9/32*** *(2006.01)*

(21) Numéro de dépôt: **07290670.4**

(22) Date de dépôt: **29.05.2007**

(54) **Procédé et dispositif d'authentification d'un utilisateur**

Verfahren und Vorrichtung zur Authentifizierung eines Benutzers

Method and device for authenticating a user

(84) Etats contractants désignés:
**ES FR GB IT**

(30) Priorité: **13.06.2006 FR 0605240**

(43) Date de publication de la demande:
**19.12.2007 Bulletin 2007/51**

(73) Titulaire: **Ingenico Group**
**75015 Paris (FR)**

(72) Inventeur: **Naccache, David**
**75018 Paris (FR)**

(74) Mandataire: **Vidon Brevets & Stratégie**
**16B, rue de Jouanet**
**BP 90333**
**35703 Rennes Cedex 7 (FR)**

(56) Documents cités:
**EP-A2- 1 331 753      WO-A2-98/47258**
**WO-A2-2005/029746      WO-A2-2006/044717**

**Description**

La présente invention concerne un procédé et un dispositif d'authentification d'un utilisateur. En particulier, l'invention concerne la production de mots de passe à usage unique.

On connaît l'authentification par mot de passe. Le mot de passe est tenu secret par son l'utilisateur afin d'éviter qu'un tiers ne dispose d'un même droit d'accès. L'aptitude à produire le mot de passe est considérée comme une preuve et suffit à un organe ou service d'administration pour autoriser un accès utilisateur. La technique du mot de passe fait partie des authentifications dites "faibles".

Un inconvénient de cette méthode est lié à la nature statique de l'information d'authentification : un tiers peut percer le mot de passe, après quoi il accède au même droit que l'utilisateur. Une solution à ce problème est fournie par les systèmes de mots de passe à usage unique (ou "one-time passwords", ci-après OTPs), dans lesquels les mots de passes sont valides pour une seule transaction.

Parmi ces systèmes, on connaît les systèmes de type asynchrone ou défi/réponse. Lorsqu'un utilisateur désire s'authentifier auprès d'un serveur, ce dernier génère un défi (par exemple aléatoire) et le transmet à l'utilisateur. L'utilisateur saisit le défi sur un dispositif client. Ce dispositif génère ensuite l'OTP par des algorithmes de hachage et de chiffrement. L'utilisateur transmet l'OTP au serveur qui dispose de toutes les informations pour le vérifier, à la suite de quoi l'utilisateur est authentifié.

On connaît en outre les systèmes synchrones, dans lesquels le fonctionnement général reste le même, si ce n'est que le défi correspond à l'heure courante (il est donc implicite) ou à un compteur interne au dispositif (par exemple un nombre incrémenté à chaque utilisation). Le dispositif client est par exemple un jeton d'authentification (ou "token"), que l'utilisateur transporte avec lui et qui sert à produire des mots de passe à partir desquels le serveur peut authentifier l'utilisateur. Un jeton d'authentification peut prendre des formes diverses : carte, calculette, porte-clé, etc. Cette dernière technique est plus simple car l'utilisateur n'a pas besoin de saisir le défi. Elle nécessite, en revanche, une synchronisation entre le dispositif client et le serveur.

Par exemple, le système SecurID de RSA comprend un dispositif client (c'est-à-dire un jeton ou token) qui produit des mots de passe à usage unique basés sur le temps et un secret partagé. Plus précisément, les dispositifs en question contiennent une clé symétrique unique, combinée à un algorithme qui génère un code toutes les 60 secondes. Associé à un code personnel de l'utilisateur, un tel dispositif permet d'obtenir une authentification forte. Le chiffre obtenu étant dynamique, il est difficile à prédire. Il est donc difficile pour un pirate informatique de deviner le code correspondant à un moment donné. Une technologie particulière est utilisée pour synchroniser chaque dispositif avec le serveur de sécurité.

Le document de brevet WO 2005/029746 décrit également un exemple de dispositif client, ou jeton, produisant des mots de passe à usage unique, de type temporel, défi/réponse ou événementiel.

Un premier inconvénient de ce système est que le dispositif client produit un mot de passe à intervalle régulier, ce qui est parfois inutile voire incompatible avec certaines applications. Ceci est en outre consommateur d'énergie.

Un autre inconvénient provient de ce qu'un attaquant qui aurait capturé le secret partagé pourrait reproduire les mots de passe. Un risque est donc l'attaque par fourche (aussi "hi-jacking"). En effet, l'authentification se fait au moment de la connexion. Passée cette authentification, il n'est pas vérifié que l'authentification est toujours correcte. Aussi, il est possible de détourner une communication, par exemple de type TCP/IP ou une transmission DTMF. Une fois le détournement effectué, le serveur dialogue avec l'attaquant, et l'attaquant utilise la session de la victime.

Il existe donc un besoin pour une solution simple aux inconvénients mentionnés ci-dessus.
L'invention a pour objet un procédé d'authentification d'un utilisateur par un serveur, et un dispositif d'authentification d'un utilisateur correspondant selon les revendications indépendantes. Des modes de réalisation préférés sont définis par les revendications dépendantes.

Selon un aspect de l'invention le procédé comprend :

- la fourniture d'un dispositif client muni d'une fonction de chiffrement des variables *K, t, x*, dans laquelle :

    - *K* est un secret partagé par le serveur et le dispositif client;
    - *t* est une variable qui dépend du temps; et
    - *x* est une variable prenant au moins deux valeurs,

- une étape de calcul par le dispositif client d'une première valeur de la fonction obtenue pour une première valeur de *x*, pour l'authentification de l'utilisateur par le serveur ; et
- une étape de calcul par le dispositif client d'une deuxième valeur de la fonction, obtenue pour une deuxième valeur de *x*, pour la vérification de l'authentification de l'utilisateur par le serveur.

Selon d'autres aspects, le procédé selon l'invention comprend une ou plusieurs des caractéristiques suivantes :

- le procédé selon l'invention comprend en outre, après la première étape de calcul, les étapes :

  ○ de fourniture de la première valeur au serveur ;
  ○ d'authentification de l'utilisateur par le serveur, utilisant la première valeur fournie ; et
  ○ de requête de l'utilisateur vers le serveur,

le procédé comprenant en outre, après la deuxième étape de calcul, les étapes:

  ○ de fourniture au serveur d'au moins une partie de la deuxième valeur; et
  ○ de vérification de l'authentification de l'utilisateur par le serveur, utilisant ladite au moins une partie de la deuxième valeur;

- le procédé d'authentification selon l'invention comprend en outre, entre les étapes de calcul, une étape de :
  ○ réception par l'utilisateur d'un défi par le serveur, concernant au moins une partie de ladite deuxième valeur de ladite fonction;
- à l'une et/ou l'autre des étapes de calcul, la fonction est prise en une valeur concaténée des variables $K$, $t$ et $x$;
- la variable $x$ est codée sur un bit ; et
- la fonction comprend une fonction de hachage.

Un autre aspect de l'invention concerne un dispositif d'authentification d'un utilisateur, muni d'une fonction de chiffrement des variables $K, t, x,$ dans laquelle :

- $K$ est un secret partagé avec un serveur;
- $t$ est une variable qui dépend du temps; et
- $x$ est une variable prenant au moins deux valeurs,

le dispositif comprenant:

- des moyens de calcul de valeurs de la fonction pour l'une et l'autre desdites au moins deux valeurs de x.

Selon d'autres aspects, le dispositif selon l'invention comprend une ou plusieurs des caractéristiques suivantes :

- le dispositif selon l'invention comprend en outre:

  - des moyens de modification par l'utilisateur de la variable x ; et
  - des moyens de déclenchement par l'utilisateur du calcul par le dispositif de valeurs de la fonction ;

- les moyens de modification et de déclenchement sont confondus ;
- le dispositif selon l'invention comprend en outre des moyens d'affichage d'une valeur de la fonction, comportant des sections d'affichage distinctes, le dispositif étant adapté à afficher des parties d'une valeur de la fonction dans des sections d'affichage respectives.
- les moyens de calcul sont adaptés à calculer une valeur de la fonction prise en une valeur concaténée des variables $K$, $t$ et $x$ ; et
- la variable $x$ est codée sur un bit.

D'autres caractéristiques et avantages de l'invention apparaîtront à la lecture de la description détaillée qui suit des modes de réalisation de l'invention, donnés à titre d'exemple uniquement et en références aux dessins annexés, qui montrent :

- Figure 1 : un ordinogramme illustrant des étapes du procédé selon un mode de réalisation de l'invention ; et
- Figure 2 : un exemple de dispositif client selon l'invention.

L'invention propose un procédé et un dispositif d'authentification d'un utilisateur, basée sur une fonction de chiffrement utilisant un secret partagé et une variable de temps, pour la production de mots de passe à usage unique. La fonction dépend en outre d'une variable additionnelle, dont l'utilisateur peut changer la valeur, le cas échéant. Ce changement de valeur intervient par exemple suite à un défi du serveur, lequel peut se produire suite à une requête de l'utilisateur. D'une part, le moment où le mot de passe est changé n'est pas prédictible. D'autre part, la valeur de l'argument change et par suite la valeur de la fonction. Compte tenu des propriétés usuelles des fonctions de chiffrement, une attaque par fourche est donc beaucoup plus difficile qu'avec un système OTP classique. L'utilisateur peut, de préférence, ne communiquer qu'une partie du nouveau mot de passe et ce, conformément à un défi simplifié du serveur. Ceci améliore substantiellement l'ergonomie du système. Le principe à la base du procédé selon l'invention permet de vérifier simplement l'authentification de l'utilisateur, notamment pour faire droit à une requête de celui-ci.

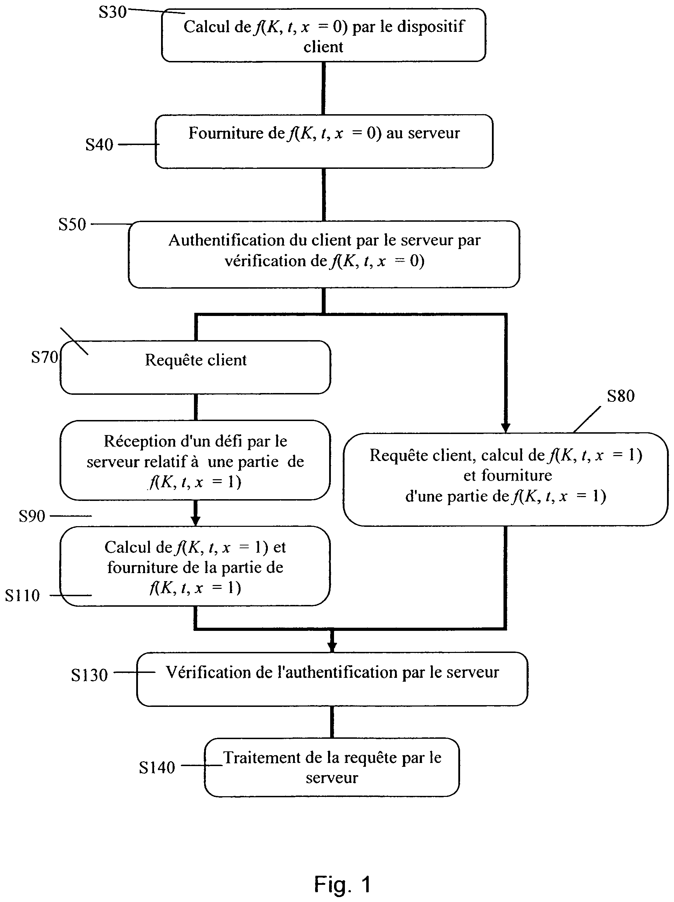

En référence à la figure 1, le procédé prévoit une étape de calcul (étape S30) par un dispositif client d'une première valeur d'une fonction $f(K, t, x)$.

La variable K est un secret partagé par le serveur et le dispositif client. Il s'agit typiquement d'une clé secrète, c'est-à-dire une clé unique que les deux correspondants sont normalement seuls à connaître. Ainsi qu'il est connu de l'art, la sécurité du chiffrement dépend de la confidentialité attribuée à cette clé commune.

La variable $t$ dépend d'une manière ou d'une autre du temps. Il s'agit typiquement d'une variable du temps courant. Pour éviter des problèmes de synchronisation lors de la vérification ultérieure côté serveur, des créneaux de temps peuvent par exemple être alloués, comme il est connu de l'art. Il est également possible d'implémenter la variable $t$ comme un nombre incrémenté à chaque connexion (donc évoluant dans le temps). Diverses autres techniques sont connues pour implémenter le secret et la variable de temps dans l'art.

Selon l'invention, la fonction dépend en outre de la variable $x$, laquelle prend au moins deux valeurs. A cette fin et selon une variante, cette variable peut être codée sur un bit, ce qui sera exemplifié plus bas.

La fonction $f$ est une fonction typiquement adaptée au chiffrement ou au hachage ou encore au code d'authentification de message (ou MAC pour message authentication code). Elle est de préférence une fonction de hachage ou bien doublée d'une fonction de hachage (par exemple MD5, SHA ou des évolutions de ces dernières), comprenant un algorithme de hachage. Ainsi qu'il est connu de l'art, une telle fonction fait correspondre les valeurs d'un grand ensemble de valeurs à une gamme réduite de valeurs. L'algorithme permet de créer une "empreinte" numérique d'un message initial.

Plus précisément, pour une fonction de hachage $f$, il est requis que : $f(n) \neq f(m)$ implique $n \neq m$ et $f(n) = f(m)$ implique très probablement $n = m$. Si l'ensemble dans lequel n est tiré est plus grand que l'ensemble des valeurs prises par $f$, cette dernière propriété est difficile à évaluer. En fait, dans un contexte cryptographique, on recherche une fonction $f$ telle que pour tout n dont on connaît le hachage $f(n)$, alors il est très difficile (c'est-à-dire techniquement impossible ou très improbable) de calculer un $m$ tel que $f(n) = f(m)$.

Dans un mode de réalisation particulièrement simple et efficace, la fonction est prise en une valeur concaténée des variables $K, t$ et $x$. Le calcul effectué peut ainsi correspondre à celui de :

$$f(C = t\ K\ x) \equiv f(K, t, x).$$

La variable x peut par exemple être un bit supplémentaire, pris en compte au niveau du hachage. Coder x sur un bit supplémentaire s'avère particulièrement simple et avantageux puisque cela suffit pour fournir deux valeurs possibles à la variable x.

A titre d'exemple, la variable de temps peut être codée sur un octet, comme le nombre 11001010. Le secret ou la clé peut par exemple avoir pour valeur la chaîne **1011001010100111101010101100001010** (ici en caractères gras pour la distinguer des autres valeurs). On pourra alors chercher à former :

(i)

$$f(K, t, x = 0) = f(11001010\mathbf{10110010101010011110101011000010}0) \ ;$$

ou
(ii)

$$f(K, t, x = 1) = f(11001010\mathbf{10110010101010011110101011000010}1).$$

L'étape de calcul ci-dessus est effectuée pour une première valeur de x, par exemple x = 0.

Cette étape de calcul est, le cas échéant, suivie d'une étape de fourniture (étape S40) d'un résultat de $f(K, t, x = 0)$ vers le serveur. Ce résultat peut être fourni par tout moyen vers le serveur, selon la configuration matérielle envisagée. Ce résultat peut notamment être envoyée par le dispositif client après validation de l'utilisateur, lorsque ce dispositif est connecté au serveur (par exemple grâce à un port USB, via un ordinateur client connecté au serveur par Internet). En variante, ce résultat est affiché par le dispositif client, grâce à quoi ce résultat peut être communiqué au serveur par l'utilisateur lui-même, en particulier lorsque le dispositif n'est pas connecté.

Le procédé selon l'invention comprend alors une étape d'authentification (étape S50) de l'utilisateur, utilisant un résultat d'un calcul équivalent au calcul ci-dessus. Concrètement, le serveur connaît le secret, le temps ou le créneau de temps et dispose ainsi es informations nécessaires pour authentifier l'utilisateur, une première fois. Un tel principe est connu de l'art, si ce n'est qu'ici, l'argument est transformé par la variable $x$, et par suite la valeur de la fonction $f$.

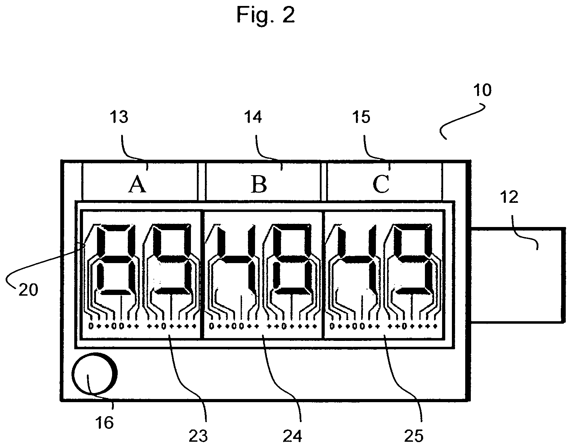

De préférence, lors d'une requête (étape S80) de l'utilisateur vers le serveur ou, alternativement, en suite à cette requête (étape S70), l'utilisateur communique au serveur au moins une partie d'une deuxième valeur de la fonction $f$ calculée par le dispositif client pour une deuxième valeur de $x$ (par exemple $x = 1$ ci-dessus). La modification de la valeur de $x$ peut être effectuée par l'utilisateur lui-même. Ce point sera décrit en référence à la figure 2.

Le serveur peut alors vérifier l'authentification selon le même principe de l'authentification elle-même. Ainsi, l'accession ultérieure à la requête de l'utilisateur peut-elle être subordonnée à une vérification de l'authentification par le serveur.

Notons que selon ce principe, il n'est pas nécessaire que le dispositif informe l'utilisateur de chaque nouveau mot de passe susceptible d'être produit pour $x = 0$. L'utilisateur n'a qu'à solliciter le dispositif que lorsque cela n'est nécessaire. Ainsi, l'utilisateur peut par exemple solliciter ou contrôler le dispositif une première fois pour s'authentifier ($x = 0$) puis le solliciter une deuxième fois pour l'édition d'un nouveau mot de passe ($x = 1$), ce qui permet au serveur de vérifier l'authentification.

Un exemple d'application est celui d'un utilisateur gérant à distance un compte bancaire. L'utilisateur est authentifié une première fois (comme à l'étape S50) par le serveur bancaire. Cette authentification lui permet d'accéder à des informations concernant son compte bancaire. Ensuite, lorsque l'utilisateur souhaite effectuer une opération sur son compte (requête utilisateur), le serveur peut soumettre la validation de cette opération (c'est-à-dire faire droit à la requête) à la condition que l'utilisateur réponde correctement à un défi émanant du serveur.

Le serveur émet un défi relatif à $f(K, t, x = 1)$. Ce défi est reçu par l'utilisateur (étape S90).

De préférence, le serveur pourrait émettre un défi ne concernant qu'une partie du résultat de $f(K, t, x = 1)$, par exemple ne concernant que deux chiffres dudit résultat (ce qui, en pratique, assure une protection suffisante pour la vérification de l'authentification). L'utilisateur n'a donc qu'un nombre réduit de caractères à communiquer au serveur. L'ergonomie du procédé s'en trouve améliorée.

En outre, la partie du résultat à communiquer au serveur peut être choisie aléatoirement par ce dernier. Par exemple, le serveur peut demander à ce que lui soit communiquée les deux premiers chiffres ou les deux suivants, etc. du résultat et ce, selon un tirage aléatoire (donc non prédictible). Ceci réduit encore les possibilités de piratage. A ces fins, un dispositif particulièrement avantageux sera décrit en référence à la figure 2.

Lorsque l'utilisateur répond correctement au défi, il peut être fait droit à sa requête (étape S140).

La figure 2 montre un exemple de dispositif client 10 selon l'invention. Ce dispositif permet l'authentification d'un utilisateur ainsi que la vérification de cette authentification, comme illustré ci-dessus.

Ce dispositif est muni de moyens de calcul de valeurs de la fonction $f(K, t, x)$ de cette fonction pour l'une et l'autre desdites au moins deux valeurs de x. Le dispositif comprend en outre des moyens de modification 16 par l'utilisateur de la variable x. Ces moyens se présentent par exemple sous la forme d'un simple bouton. Une pression de ce bouton permet de passer de $x = 0$ à $x = 1$.

Le dispositif 10 comprend en outre des moyens de déclenchement 16 par l'utilisateur du calcul par le dispositif de valeurs de la fonction; ainsi que de moyens d'affichage 20 d'une valeur de la fonction. Ces moyens peuvent par exemple être un écran à cristaux liquides.

Ainsi, dans un mode de réalisation, le dispositif peut afficher par défaut un mot de passe correspondant au secret et à la variable de connexion ou de temps courant (par exemple un créneau de temps courant). Ce mot de passe peut lui permettre de se faire authentifier par le serveur à un instant donné. Plus tard, en réponse à un défi du serveur, l'utilisateur presse ce bouton. La valeur de $x$ est alors commutée.

De préférence, les moyens de modification 16 et de déclenchement 16 sont confondus. De la sorte, lorsque l'utilisateur presse le bouton 16, il fait en même temps apparaître le résultat du calcul de $f(K, t, x = 1)$.

De préférence également, les moyens d'affichage comportent des sections d'affichage 23 - 25 distinctes. Ces sections peuvent par exemple être obtenues en démarquant des sections sur l'écran 20 d'affichage ou en prévoyant des écrans distincts. L'homme du métier cherchera par exemple à espacer l'affichage des caractères entre les sections, pour en faciliter la lecture.

En outre, le dispositif est adapté à afficher des parties d'une valeur de la fonction dans des sections d'affichage 23, 24, 25 respectives. Ainsi, l'utilisateur dispose d'un dispositif ergonomique, en liaison avec le procédé exposé ci-dessus. Comme décrit plus haut, le serveur peut faire porter le défi sur l'une de ces sections. Par exemple, le défi peut-être : "Entrez les deux chiffres affichés dans la section A". En suite à ce défi et dans l'exemple de la figure, l'utilisateur devra entrer le nombre 89.

En référence à l'exemple d'application décrit plus haut, des défis types, associés à des opérations sur un compte bancaire, pourraient être:

- Pour lire votre solde, presser le bouton de dérivation 16 et entrez le nombre apparaissant sous la lettre C; et
- pour commander un nouveau chéquier, presser le bouton de dérivation 16 et entrez le nombre apparaissant sous la lettre B.

Le dispositif pourrait, selon une alternative, comporter un LCD avec dix sections d'affichage distinctes, mise en correspondance avec des lettres, par exemple ABCDEFGHIJ.

Dans une variante, le défi peut être implicite. Par exemple, une opération de virement depuis le compte bancaire de l'utilisateur est implicitement associée à la fourniture du nombre affiché dans la section A, selon une procédure préétablie ou portée à l'attention de l'utilisateur par défaut. Dans ce cas, l'utilisateur fournit au serveur le nombre correspondant (par exemple en saisissant ce nombre dans une boîte de requête) en même temps qu'il fournit la requête.

Selon une autre variante, le dispositif comprend en outre des moyens 12 de connexion au serveur, pour transmettre une valeur de la fonction vers le serveur, par exemple un port USB 12. Ainsi, la fourniture de valeurs de la fonction de $f(K, t, x)$ peut-il être transmis directement depuis le dispositif client, lorsque celui-ci est connecté au serveur, par exemple via un ordinateur personnel de l'utilisateur et le réseau Internet.

Le cas échéant, seules les valeurs de $f(K, t, x = 0)$ sont susceptibles d'être envoyée au serveur pour l'authentification. En revanche, le dispositif peut être conçu de sorte que les valeurs de $f(K, t, x = 1)$ ne soient disponibles qu'à l'affichage, pour une sécurité accrue.

Selon une autre variante, le dispositif pourrait être muni de deux sections d'affichage principales distinctes (par exemple, deux LCD distincts). L'une afficherait les valeurs de $f(K, t, x = 0)$, tandis que l'autre pourrait afficher les valeurs de $f(K, t, x = 1)$. De la sorte, les valeurs de $f(K, t, x = 0)$ et de $f(K, t, x = 1)$ sont disponibles à l'affichage et l'utilisateur peut voir chacune de ces valeurs à tout moment. Il n'a donc pas besoin de déclencher le calcul de $f(K, t, x = 1)$ par une action spécifique. Le dispositif n'a alors à être muni de bouton. En outre, à l'intérieure de chacune des sections d'affichage principales, le dispositif pourrait afficher des parties des valeurs de la fonction $f$ dans des sous-sections d'affichage distinctes, à la manière des sections d'affichage 23, 24, 25.

L'invention trouvera ainsi avantageusement à s'appliquer à des terminaux de paiement. Par exemple,on pourra chercher à faire correspondre un défi à un montant d'une transaction effectuée au moyen de celui-ci, par exemple chez un commerçant.

L'invention n'est en outre pas limitée aux variantes décrites ci-avant mais est susceptible de nombreuses autres variations aisément accessibles à l'homme du métier. A titre d'exemple, il est possible d'implémenter une fonction de hachage avec tolérance aux erreurs. Il est aussi possible de soumettre l'utilisation du dispositif client à la validation d'un mot de passe personnel statique, etc.

**Revendications**

1. Procédé d'authentification d'un utilisateur par un serveur bancaire, comprenant :

   - la fourniture d'un dispositif client muni d'une fonction de chiffrement des variables K, t, x, dans laquelle :

      - K est un secret partagé par le serveur et le dispositif client;
      - t est une variable qui dépend du temps; et
      - x est une variable prenant au moins deux valeurs,

   - une première étape de calcul (S30) par le dispositif client d'une première valeur de la fonction obtenue pour une première valeur de x, pour l'authentification de l'utilisateur par le serveur ;
   - une étape de fourniture (S40) de ladite première valeur de ladite fonction au serveur ;
   - une étape d'authentification (S50) de l'utilisateur par le serveur, utilisant ladite première valeur fournie ;
   - une étape de requête (S70, S80) de l'utilisateur vers le serveur pour effectuer une opération sur un compte bancaire ;
   - une deuxième étape de calcul (S80, S110) par le dispositif client d'une deuxième valeur de la fonction, obtenue pour une deuxième valeur de x, pour la validation de ladite opération par le serveur ;
   - une étape de fourniture (S110, S80) au serveur d'au moins une partie de ladite deuxième valeur de ladite fonction ;
   - une étape de validation de ladite opération (S130) par le serveur, utilisant ladite au moins une partie de ladite deuxième valeur de ladite fonction ; et
   - une étape de traitement de ladite opération (S140) suite à ladite validation de l'opération.

2. Le procédé d'authentification selon la revendication 1, **caractérisée en ce que**, à l'une et/ou l'autre des étapes de calcul (S30), (S80, S 110), la fonction est prise en une valeur concaténée des variables K, t et x.

3. Le procédé d'authentification selon l'une quelconque des revendications 1 et 2, **caractérisée en ce que** la variable x est codée sur un bit.

4. Le procédé d'authentification selon l'une quelconque des revendications 1 à 3, **caractérisée en ce que** la fonction comprend une fonction de hachage.

5. Dispositif d'authentification d'un utilisateur, muni d'une fonction de chiffrement des variables K, t, x, dans laquelle :

   - K est un secret partagé avec un serveur bancaire ;
   - t est une variable qui dépend du temps ; et
   - x est une variable prenant au moins deux valeurs,

   le dispositif comprenant :

   - des moyens de calcul d'une première valeur de la fonction obtenue pour une première valeur de x, pour l'authentification de l'utilisateur par le serveur ;
   - des moyens de fourniture de ladite première valeur de ladite fonction au serveur ;
   - des moyens d'émission d'une requête de l'utilisateur vers le serveur pour effectuer une opération sur un compte bancaire ;
   - des moyens de calcul d'une deuxième valeur de la fonction, obtenue pour une deuxième valeur de x, pour la validation de ladite opération par le serveur et pour le traitement de ladite opération suite à ladite validation de ladite opération ; et
   - des moyens de fourniture au serveur d'au moins une partie de ladite deuxième valeur de ladite fonction.

6. Le dispositif selon la revendication 5, **caractérisé en ce que** le dispositif comprend en outre:

   - des moyens de modification (16) par l'utilisateur de la variable x ; et
   - des moyens de déclenchement (16) par l'utilisateur du calcul par le dispositif de valeurs de la fonction.

7. Le dispositif selon la revendication 6, **caractérisé en ce que** les moyens (16) de modification et de déclenchement sont confondus.

8. Le dispositif selon la revendication 5, 6 ou 7, **caractérisé en ce que** le dispositif comprend en outre des moyens d'affichage (20) d'une valeur de la fonction, comportant des sections (23 - 25) d'affichage distinctes, le dispositif étant adapté à afficher des parties d'une valeur de la fonction dans des sections (23 - 25) d'affichage respectives.

9. Le dispositif selon l'une des revendications 5 à 8, **caractérisé en ce que** les moyens de calcul sont adaptés à calculer une valeur de la fonction prise en une valeur concaténée des variables K, t et x.

10. Le dispositif selon l'une des revendications 5 à 9, **caractérisé en ce que** la variable x est codée sur un bit.

**Patentansprüche**

1. Verfahren zur Authentifizierung eines Benutzers durch einen Bankserver, umfassend:

   - das Bereitstellen eines Client-Gerätes, das mit einer Verschlüsselungsfunktion der Variablen K, t, x versehen ist, wobei:

     - K ein geteiltes Geheimnis zwischen dem Server und dem Client-Gerät ist,
     - t eine Variable ist, die von der Zeit abhängt, und
     - x eine Variable ist, die mindestens zwei Werte annimmt,

   - einen ersten Schritt des Berechnens (S30) durch das Client-Gerät eines ersten Wertes der Funktion, die für einen ersten Wert von x erhalten wird, für die Authentifizierung des Benutzers durch den Server,
   - einen Schritt des Bereitstellens (S40) des ersten Wertes der Funktion für den Server,

- einen Schritt der Authentifizierung (S50) des Benutzers durch den Server, wobei der erste bereitgestellte Wert verwendet wird,
- einen Schritt des Anfragens (S70, S80) vom Benutzer an den Server, um eine Transaktion auf einem Bankkonto durchzuführen,
- einen zweiten Schritt des Berechnens (S80, S110) durch das Client-Gerät eines zweiten Wertes der Funktion, die für einen zweiten Wert von x erhalten wird, für die Validierung der Transaktion durch den Server,
- einen Schritt des Bereitstellens (S110, S80) mindestens eines Teils des zweiten Wertes der Funktion für den Server,
- einen Schritt der Validierung der Transaktion (S130) durch den Server unter Verwendung des mindestens einen Teils des zweiten Wertes der Funktion und
- einen Schritt des Verarbeitens der Transaktion (S140) infolge der Validierung der Transaktion.

2. Verfahren zur Authentifizierung nach Anspruch 1, **dadurch gekennzeichnet, dass** bei dem einen und/oder dem anderen der Schritte des Berechnens (S30), (S80, S 110) die Funktion aus einem verketteten Wert der Variablen K, t und x genommen wird.

3. Verfahren zur Authentifizierung nach einem der Ansprüche 1 und 2, **dadurch gekennzeichnet, dass** die Variable x in einem Bit codiert wird.

4. Verfahren zur Authentifizierung nach einem der Ansprüche 1 bis 3, **dadurch gekennzeichnet, dass** die Funktion eine Hash-Funktion enthält.

5. Vorrichtung zur Authentifizierung eines Benutzers, die mit einer Verschlüsselungsfunktion der Variablen K, t, x versehen ist, wobei:

- K ein mit einem Bankserver geteiltes Geheimnis ist,
- t eine Variable ist, die von der Zeit abhängt, und
- x eine Variable ist, die mindestens zwei Werte annimmt,

wobei die Vorrichtung aufweist:

- Mittel zum Berechnen eines ersten Wertes der Funktion, die für einen ersten Wert von x erhalten wird, für die Authentifizierung des Benutzers durch den Server,
- Mittel zum Bereitstellen des ersten Wertes der Funktion für den Server,
- Mittel zum Senden einer Anfrage des Benutzers an den Server, um eine Transaktion auf einem Bankkonto durchzuführen,
- Mittel zum Berechnen eines zweiten Wertes der Funktion, die für einen zweiten Wert von x erhalten wird, für die Authentifizierung der Transaktion durch den Server und für das Verarbeiten der Transaktion infolge der Validierung der Transaktion und
- Mittel zum Bereitstellen mindestens eines Teils des zweiten Wertes der Funktion für den Server.

6. Vorrichtung nach Anspruch 5, **dadurch gekennzeichnet, dass** die Vorrichtung ferner aufweist:

- Mittel zum Modifizieren (16) der Variablen x durch den Benutzer und
- Mittel zum Auslösen (16) durch den Benutzer des Berechnens von Werten der Funktion durch die Vorrichtung.

7. Vorrichtung nach Anspruch 6, **dadurch gekennzeichnet, dass** die Mittel (16) zum Modifizieren und zum Auslösen zusammenfallen.

8. Vorrichtung nach Anspruch 5 , 6 oder 7, **dadurch gekennzeichnet, dass** die Vorrichtung ferner Mittel zum Anzeigen (20) eines Wertes der Funktion aufweist, die verschiedene Anzeigeabschnitte (23-25) aufweisen, wobei die Vorrichtung geeignet ist, Teile eines Wertes der Funktion in den jeweiligen Anzeigeabschnitten (23-25) anzuzeigen.

9. Vorrichtung nach einem der Ansprüche 5 bis 8, **dadurch gekennzeichnet, dass** die Mittel zum Berechnen geeignet sind, einen Wert der Funktion zu berechnen, der aus einem verketteten Wert der Variablen K, t und x genommen ist.

10. Vorrichtung nach einem der Ansprüche 5 bis 9, **dadurch gekennzeichnet, dass** die Variable x in einem Bit codiert ist.

## EP 1 868 316 B1

**Claims**

1. Method for user authentication by a bank server, comprising:

    - providing a client device provided with an encryption function of variables *K, t, x,* in which:

        - *K* is a secret shared by the server and the client device;
        - *t* is a time-dependent variable; and
        - *x* is a variable having at least two values,

    - a step of first calculation (S30) by the client device of a first value of the function obtained for a first value of *x,* for authentication of the user by the server;
    - a step of providing (S40) said first value of said function to the server;
    - a step of authentication (S50) of the user by the server, using said first value provided; and
    - a step (S70, S80) of user request to the server to carry out an operation on a bank account,
    - a step of second calculation (S80, S110) by the client device of a second value of the function, obtained for a second value of x, for the validation of said operation by the server;
    - a step of providing (S110, S80) the server with at least one part of said second value of said function;
    - a step of validation (S130) of said operation by the server, using said at least one part of said second value of said function; and
    - a step of processing said operation (S140) following said validation of said operation.

2. The method of authentication according the claim 1, wherein, at one and/or the other of the first and second calculation steps (S30), (S80, S 110), the function uses a concatenated value of variables *K, t* and *x.*

3. The method of authentication according to any one of claims 1 and 2, wherein the variable *x* is a one-bit-coded variable.

4. The method of authentication according to any one of claims 1 to 3, wherein the function comprises a hash function.

5. User authentication device, provided with an encryption function of variables *K, t, x,* in which:

    - *K* is a secret shared with a bank server;
    - *t* is a time-dependent variable; and
    - *x* is a variable having at least two values,

    the device comprising:

    - means of calculation of a first value of the function obtained for a first value of *x*, for authentication of the user by the server;
    - means of providing said first value of said function to the server;
    - means of emitting a user request to the server to carry out an operation on a bank account,
    - means of calculation of a second value of the function, obtained for a second value of *x*, for the validation of said operation by the server and for processing said operation following said validation of said operation;
    - means of providing the server with at least one part of said second value of said function.

6. The device according to claim 5, wherein the device also comprises:

    - means (16) for the user to change the variable *x*; and
    - means of activation (16) by the user of calculation of the values of the function by the device.

7. The device according to claim 6, wherein the means (16) of changing and activation are integrated.

8. The device according to any one of claims 5, 6 or 7, wherein the device also comprises means of display (20) of a value of the function, comprising different display sections (23-25), the device being capable of displaying parts of a value of the function in respective display sections (23-25).

9. The device according to any one of claims 5 to 8, wherein the means of calculation are capable of calculating a value of the function using a concatenated value of the variables *K, t* and *x.*

10. The device according to any one of claims 5 to 9, wherein the variable $x$ is a one-bit-coded variable.

S30 — Calcul de $f(K, t, x = 0)$ par le dispositif client

S40 — Fourniture de $f(K, t, x = 0)$ au serveur

S50 — Authentification du client par le serveur par vérification de $f(K, t, x = 0)$

S70 — Requête client

S80

Réception d'un défi par le serveur relatif à une partie de $f(K, t, x = 1)$

Requête client, calcul de $f(K, t, x = 1)$ et fourniture d'une partie de $f(K, t, x = 1)$

S90 —

Calcul de $f(K, t, x = 1)$ et fourniture de la partie de $f(K, t, x = 1)$

S110 —

S130 — Vérification de l'authentification par le serveur

S140 — Traitement de la requête par le serveur

## Fig. 1

Fig. 2

**EP 1 868 316 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2005029746 A